# EUROPÄISCHE PATENTANMELDUNG

(11) **EP 2 133 161 A1**
(43) Veröffentlichungstag der Anmeldung: **16.12.2009**
(21) Anmeldenummer: 08010505.9
(22) Anmeldetag: 10.06.2008
(51) Int. Cl.: B21D 5/10, F16L 33/22, F16L 13/14

(54) **Lasergeschweisste Schiebehülse**

(71) Anmelder: Dömer GmbH & Co. KG, 57368 Lennestadt (DE)
(72) Erfinder: Asbeck, Jochen, 57439 Attendorn (DE)
(74) Vertreter: Neumann, Ernst Dieter

(57) **Zusammenfassung**

Schiebehülse (11) zur Festlegung eines Schlauch- oder Rohrendes (41) auf einem Anschlußstutzen (51), wobei die Schiebehülse (11) aus einem rundgebogenen Bandabschnitt aus Metallband besteht und am Stoß der Bandendkanten (14,15) mit einer Schweißnaht (16) mittels Laserschweißens verbunden ist.

## Beschreibung

Die Erfindung betrifft eine Schiebehülse zur Festlegung eines Schlauch- oder Rohrendes auf einem Anschlußstutzen sowie ein Verfahren zur Herstellung derartiger Schiebehülsen. Der Anschlußstutzen kann hierbei Bestandteil einer Absperr- oder Vertellerarmatur sein, an der das Schlauch- oder Rohrende angeschlossen wird, oder Bestandteil eines Doppelstutzens sein, der zum Verbinden zweier Schlauch- oder Rohrenden dient. Die Schläuche oder Rohre dienen ganz allgemein dem Leiten von flüssigen oder gasförmigen Medien, die unter Druck stehen.

Schiebehülsen der vorbezeichneten Art und für den genannten Zweck sind als Bestandteile sogenannter zweiteiliger metallischer Klemmverbinder beispielsweise in der DE 88 05 379 U1, der DE 88 13 209 U1 und der DE 103 45 286 B4 beschrieben. Diese zweiteiligen Anordnungen umfassen hierbei als erstes Teil einen Anschlußstutzen, der üblicherweise mit Umfangsrillen oder Umfangsnuten versehen ist und auf den ein zunächst unbewehrtes Schlauch- oder Rohrende aufgeschoben wird, sowie als zweites Teil eine zuvor auf das Schlauch- oder Rohrende aufgefädelte Schiebehülse, die anschließend über den Schlauch bzw. das Rohr im Bereich des innenliegenden Anschlußstutzens geschoben wird. Das notwendigerweise elastisch oder plastisch verformbare Material des Schlauch- oder Rohrendes formt sich dabei in die Umfangsrillen oder Umfangsnuten auf dem Anschlußstutzen ein. Es ist bekannt, die hierbei verwendeten Schiebehülsen mit einer inneren Aufgleitrundung oder einer inneren Aufgleitfase zu versehen, um das Aufschieben auf das gegebenenfalls aufgeweitete und zumindest innen abgestützte Schlauch- oder Rohrende zu erleichtern. Aufgrund der hohen Radialkräfte, denen Schiebehülsen der hiermit beschriebenen Art beim Herstellen der beschriebenen Verbindung unterworfen sind, werden die Schiebehülsen als Drehteile erzeugt, die von Rohrabschnitten ausgehend mechanisch gefertigt werden. Diese Art der Herstellung ist sehr kostenintensiv und hat den Nachteil, daß die Durchmesser der Schiebehülsen von den Rohrdurchmessern der aus dem geforderten Material zur Verfügung stehenden Rohre abhängig sind.

Aus der DE 40 09 259 A1 und der DE 40 21 746 C2 ist es bekannt, Spannringe zur Befestigung von Faltenbälgen auf Gelenk- oder Wellenteilen in der Weise herzustellen, daß von endlosem Bandmaterial Bandabschnitte abgeteilt werden, deren Bandendkanten mit - in Umfangsrichtung betrachtet - Hinterschneidungen aufweisenden Farmschfuß-Elementen abgeteilt werden. Die Bandabschnitte werden dann rundgebogen und die Formschluß-Elemente ineinandergefügt.

Die derart ineinandergreifenden Bandenden werden dann notwendigerweise verquetscht oder punktgeschweißt, um bei anschließenden Durchmesserreduzierungen zusammenzuhalten. Der eigentliche Spannvorgang erfolgt durch thermisches Schrumpfen der Spannringe oder durch mechanisches Crimpen, d.h. radiales Stauchen der Spannringe. Das Material muß hierbei vor dem abschließenden Herstellen der Verbindung weich sein. Die dabei von den Spannringen aufbringbaren radialen Kräfte sind gering und reichen allenfalls zum mechanischen Fixieren von Faltenbälgen oder dergleichen, insbesondere wenn eine Innennut am Gelenkbauteil oder an der Welle vorgesehen ist, in die der Faltenbalg formschlüssig eingreifen kann. Eine fluiddichte Verbindung für hohen hydraulischen oder pneumatischen Innendruck ist mit diesen Spannringen nicht darstellbar, insbesondere nicht, wenn der Innendruck dynamischen Veränderungen unterliegt.

Der vorliegenden Erfindung liegt die Aufgabe zugrunde, neuartige Schiebehülsen und ein Verfahren zu ihrer Herstellung bereitzustellen, die kostengünstig sind und zur Herstellung fluiddichter hoch belastbarer Verbindungen zwischen Schlauch- oder Rohrenden und Anschlußstutzen geeignet sind.

Diese Aufgabe wird gelöst durch eine Schiebehülse zur Festlegung eines Schlauch- oder Rohrendes auf einem Anschlußstutzen, wobei die Schiebehülse aus einem rundgebogenem Bandabschnitt aus Metallband besteht und am Stoß der Bandendkanten mit einer Schweißnaht verbunden ist. Hierbei ist insbesondere vorgesehen, daß die Schweißnaht einen geraden Verlauf hat. Mit den hiermit beschriebenen Merkmalen sind Schiebehülsen beliebigen Durchmessers auf äußerst kostengünstige Weise herstellbar, die hohen radialen Belastungen standhalten können, so daß sie zum Ersatz der bisherigen teuren aus Rohrmaterial gedrehten Schiebehülsen dienen können. Die Schiebehülsen sind dickwandig mit einem Verhältnis der Wanddicke zum Außendurchmesser von mehr als 10%, wobei die Wanddicke vorzugsweise mehr als 2 mm beträgt. Das Abteilen einzelner Bandabschnitte vom endlosem Metallband erfolgt bevorzugt durch Stanzen, das Rundbiegen und Schweißen gegebenenfalls in nur zwei Schritten, wobei in einem ersten Schritt aus dem geraden Bandmaterial zunächst ein U-förmiger Bügel und in einem zweiten Schritt die ringförmig geschlossene und an den Bandenden verschweißte Hülse gebildet wird.

In besonders günstiger Ausgestaltung ist vorgesehen, daß die Schiebehülse zumindest eine plastisch umgeformte Innenkante aufweist, die eine Aufgleitfase oder eine Aufgleitrundung bildet. Darüber hinaus wird vorgeschlagen, daß die Schiebehülse auf dem Innenumfang plastisch eingeformte Einzelvertiefungen zur formschlüssigen Aufnahme von Material eines Schlauch- oder Rohrendes aufweist oder daß die Schiebehülse auf dem Innenumfang eine plastisch eingeformte Umfangsnut zur formschlüssigen Aufnahme von Material eines Schlauch- oder Rohrendes aufweist.

Hiermit werden wesentliche Elemente der Schiebehülse auf kostengünstige Weise darstellbar, ohne daß irgendwelche mechanischen, d.h. spanenden Bearbeitungschritte, insbesondere Drehoperationen, erforderlich werden.

Das Bandmaterial ist, wie bereits betont, relativ dickwandig, z. B. wird bei einer Nennweite, d. h. einem Innendurchmesser, der Schiebehülse von 16 mm eine Wandstärke von 2,2 mm vorgesehen.

Die erfindungsgemäße Schiebehülse kann - belastungsabhängig - aus unvergütetem Material, insbesondere aus Edelstahl, oder aus vergütetem Material, ebenfalls auch aus Edelstahl bestehen. Insbesondere bei hohen dynamischen Belastungen sind Vergütungsstähle zu bevorzugen, um bei hoher Lebensdauer gleich bleibende Festigkeit sicherzustellen. Sofern kein Edelstahl verwendet wird, ist eine Oberflächenbeschichtung der Schiebehülse zum Korrosionsschutz vorzusehen.

Das erfindungsgemäße Verfahren zur Herstellung einer Schiebehülse zur Festlegung eines Schlauch- oder Rohrendes auf einem Anschlußstutzen zeichnet sich dadurch aus, daß von endlosem Metallband Bandabschnitte abgeteilt werden, wobei die Trennstellen jeweils Verschweißkanten bilden, und daß die Bandabschnitte rundgebogen werden und längs der aneinanderstoßenden Schweißkanten miteinander verschweißt werden. Bevorzugt werden die Verschweißkanten mittels Laserschweißens verschweißt, wobei auch andere Schweißverfahren zum Einsatz kommen können.

Wie bereits vorstehend genannt ist hierbei insbesondere vorgesehen, daß das endlose Bandmaterial - insbesondere vor dem Abteilen der Bandabschnitte - zur Bildung einer Kantenrundung oder Fase längs einer Kante gerollt wird, die nach dem Rundbiegen zu einer Innenkante wird, um eine innere Aufgleitfase oder eine innere Aufgleitrundung am Ende der Schiebehülse zu bilden.

Weiterhin wird vorgeschlagen daß das endlose Bandmaterial - insbesondere vor dem Abteilen der Bandabschnitte - zur Bildung von Formschlußmitteln mit Abstand zu einer Kante mit periodisch angeordneten Einprägungen versehen wird, die nach dem Rundbiegen auf dem Innenumfang verteilt liegen, oder daß das endlose Bandmaterial - insbesondere vor dem Abteilen der Bandabschnitte - zur Bildung von Formschlußmitteln mit Abstand zu einer Kante mit einer gerollten Längsnut versehen wird, die nach dem Rundbiegen auf den Innenumfang liegt.

Sofern, wie bevorzugt vorgeschlagen wird, Metallband aus Vergütungsstahl, insbesondere auch aus Edelstahl eingesetzt wird, findet das Vergüten, also die Wärmebehandlung der Schiebehülse nach dem Abteilen, Rundbiegen und Verschweißen der Bandabschnitte des Metallbandes zu einer Hülse statt.

Bevorzugte Ausführungsbeispiele der Erfindung sind in den Zeichnungen dargestellt und werden nachstehend beschrieben.
- Figur 1: zeigt eine erfindungsgemäße Schiebehülse in Schrägansicht;
- Figur 2: zeigt einen Längsschnitt durch eine erfindungsgemäße Schiebehülse
a) in einer ersten und zweiten Ausführung und
b) in einer dritten und vierten Ausführung;
- Figur 3: zeigt eine Anordnung aus einem Anschlußflansch, einem darauf aufgeschobenen Schlauchende und einer darüber geschobenen erfindungsgemäßen Schiebehülse.

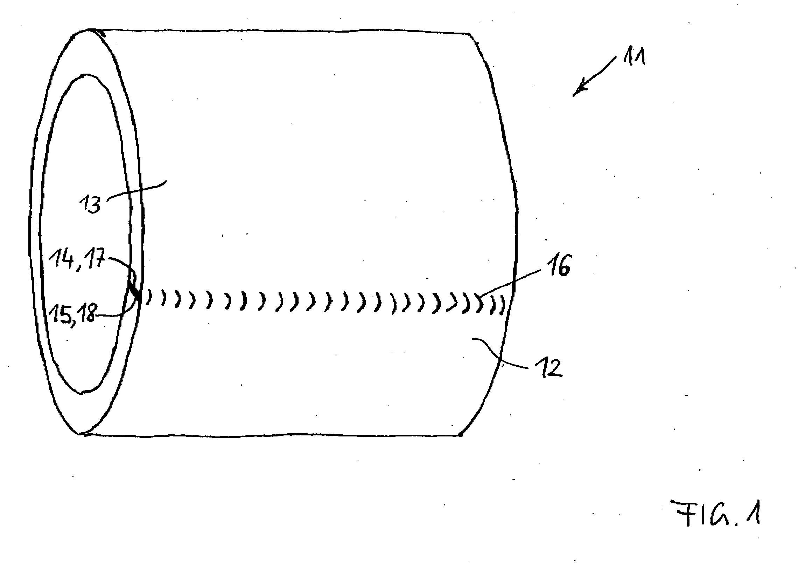

In Figur 1 ist eine erfindungsgemäße Schiebehülse 11 in einer ersten Ausführung gezeigt, die aus einem Bandabschnitt hergestellt ist, der rundgebogen ist und an dessen Bandenden 12, 13 jeweils gerade Bandendkanten 14, 15 als Verschweißkanten 17, 18 ausgebildet sind, die einen Verlauf in radialer und in Längsrichtung der Schiebehülse 11 haben. Die Verschweißkanten 14, 15 verlaufen auf Stoß parallel zueinander. Die Verschweißkanten 14, 15 sind mit einer über die gesamte Länge der Schiebehülse verlaufenden, geraden Schweißnaht 16 miteinander verschweißt, wobei die Schweißnaht 16 vorzugsweise als I-Naht ausgebildet ist. Die Ausbildung der Schweißnaht 16 als 1-Naht ergibt sich vorteilhaft daraus, daß vom endlosem Bandmaterial unmittelbar aneinanderstoßende Bandabschnitte durch Schnitte senkrecht zum Verlauf des Bandmaterials abgetrennt werden, so daß fortlaufend gerade Verschweißkanten 14, 15 entstehen. Selbstverständlich wäre auch eine Schweißnaht 16 als V-Naht denkbar, da ein Abtrennen des Bandmaterials unter einem Winkel bezogen auf den Verlauf des Bandmaterials genauso möglich ist. Nach dem Rundbiegen zur Schiebehülse 11. in beispielsweise zwei Umformschritten, bei denen zunächst eine U-Form und dann eine Ringform entstehen, kann die erfindungsgemäße Schiebehülse 11 vergütet worden sein, so daß sie Federstahleigenschaft erhält.

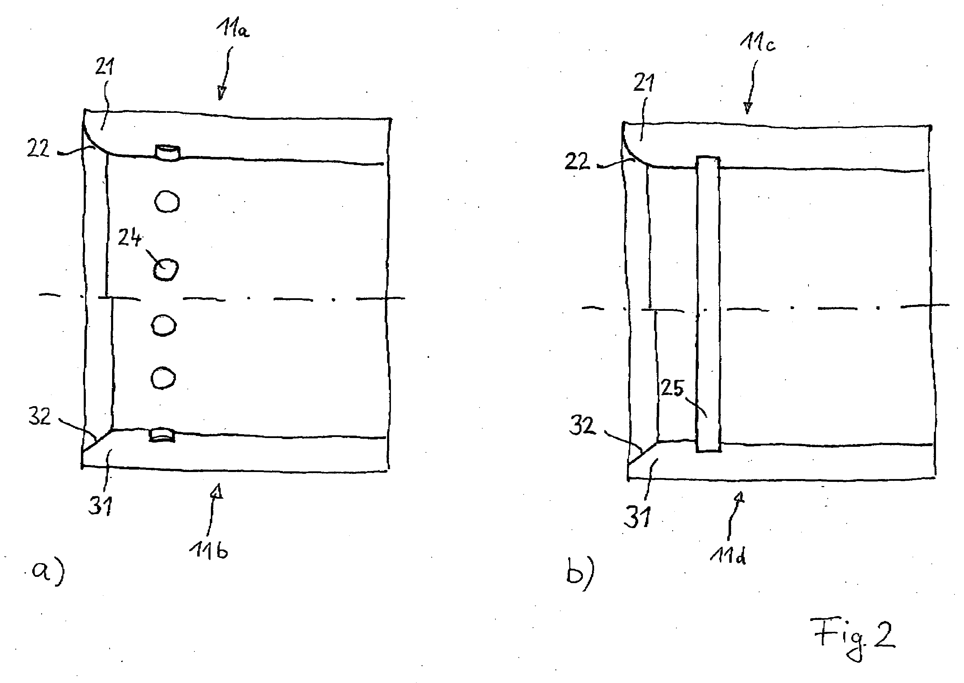

In Figur 2a ist in der oberen Bildhälfte eine Schiebehülse 11a in einer ersten Ausführung und in der unteren Bildhälfte eine Schiebehülse 11b in einer zweiten Ausführung im Längsschnitt gezeigt. Die Schiebehülse 11a hat eine Innenkante 21 mit einer inneren Rundung 22, die durch Kantenrollen des endlosen Bandmaterials vor dem Abtrennen einzelner Bandabschnitte hergestellt werden kann. Darüber hinaus hat die Schiebehülse 11a auf dem Innenumfang verteilte Einzelvertiefurigen 24, die ebenfalls am endlosen Bandmaterial durch spanlose Umformung in Form periodischer Stanz- oder Prägevorgänge hergestellt werden können. Die Anzahl der auf dem Umfang verteilten Einzelvertiefungen 24 kann selbstverständlich in Abhängigkeit des Einsatzzweckes der Schiebehülse 11a variiert werden. Die Schiebehülse 11b hat an einer Innenkante 31 eine konische Fase 32, die ebenfalls am endlosen Bandmaterial vor dem Abteilen einzelner Bandabschnitte durch Kantenrollen erzeugt sein kann.

In Figur 2b ist in der oberen Bildhälfte eine Schiebehülse 11c in einer dritten Ausführung und in der unteren Bildhälfte eine Schiebehülse 11d in einer vierten Ausführung im Längsschnitt gezeigt, wobei die Unterschiede zu den in Figur 2a dargestellten Ausführungen darin bestehen, daß die Schiebehülsen 11c und 11d anstatt auf dem Umfang verteilter Eirizelvertiefungen 24, eine Umfangsnut 36 aufweisen, die durch Längsrollen am endlosen Bandmaterial hergestellt werden kann.

Die Rundungen bzw. Fasen 22, 32 dienen zum Aufgleiten der Schiebehülse 11a bis . 11d auf einen Schlauch oder ein Rohrstück, während die Einzeivertiefungeil 24 und die Umfangsnut 25 ein Einfließen von Material des Schlauches oder Rohres nach radial außen ermöglichen, auf das die Schiebehülse 11a bis 11d axial aufgeschoben werden soll.

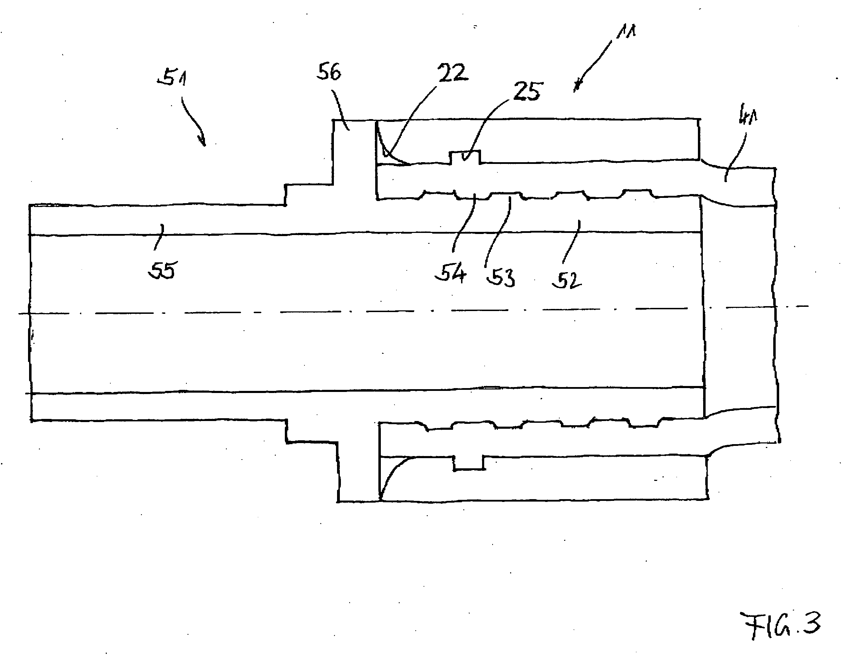

In Figur 3 ist die erfindungsgemäße Verbindungsanordnung zwischen einem verformbaren Schlauchende 41 und einem Anschlussstutzen 51 und einer erfindungsgemäßen Schiebehülse 11 dargestellt. Der Anschlussstutzen 51 hat einen Anschlagflansch 56, ein erstes Stutzenende 52 mit außenliegenden Rippen 53 und dazwischenliegenden Nuten 54, sowie ein zweites glattes Stutzenende 55 z.B, zum Anschweißen oder Anschrauben. Auf das erste Stutzenende 52 ist das Schlauchende 41 bis zum Anschlag am Flansch 56 aufgeschoben, wobei das Schlauchende 41 radial aufgeweitet worden ist.

Die zuvor mit Spiel auf das Schlauchende 41 aufgefädelte erfindungsgemäße Schiebehülse 11 ist anschließend von rechts nach links bis zum Anschlag am Flansch 54 auf das Schlauchende 41. aufgeschoben worden, wobei die Rundung 22 ein Aufgleiten der Schiebehülse 11 auf das Schlauchende 41 ermöglicht. Wenn die Schiebehülse 11 am Flansch 56 zur Anlage gekommen ist, bilden sich Formschlußverbindungen der Innenseite des Schlauchendes mit den Rippen 53 und Nuten 54 sowie ein formschlüssiger Eingriff von Schlauchmaterial in die Innennut 25 der Schiebehülse 11 aus. Das Schlauchende 41 ist hiermit formschlüssig zwischen Stutzenende 52 und Schiebehülse 11 festgelegt, so daß eine Verbindung entstanden ist, die das Schlauchende auch bei hohen gegebenenfalls pulsierenden Innendrücken im Fluidsystem Schlauch auf dem Anschlußstutzen 51 festhält.

### Bezugszeichenliste

- 11: Schiebehülse
- 12: Bandende
- 13: Bandende
- 14: Bandendkante
- 15: Bandendkante
- 16: Schweißnaht
- 17: Verschweißkante
- 18: Verschweißkante
- 21: Innenkante
- 22: Rundung
- 24: Vertiefung
- 25: Nut
- 31: Innenkante
- 35: Fase
- 41: Schlauchende
- 51: Anschlußstutzen
- 52: Stutzenende
- 53: Rippe
- 54: Nut
- 55: Stutzenende
- 56: Flansch

## Patentansprüche

1. Schiebehülse (11) zur Festlegung eines Schlauch- oder Rohrendes auf einem Anschlußstutzen, wobei die Schiebehülse aus einem rundgebogenen Bandabschnitt (41) aus Metallband besteht und am Stoß der Bandendkanten (14, 15) mit einer Schweißnaht (16) verbunden ist.

2. Schiebehülse (11) nach Anspruch 1,
**dadurch gekennzeichnet,**
**daß** die Schweißnaht (16) einen geraden Verlauf hat.

3. Schiebehülse (11) nach einem der Ansprüche 1 oder 2,
**dadurch gekennzeichnet,**
**daß** die Schiebehülse (11) zumindest eine plastisch umgeformte Innenkante aufweist, die eine Aufgleitrundung (22) oder eine Aufgleitfase (32) bildet.

4. Schiebehülse (11) nach einem der Ansprüche 1 bis 3,
**dadurch gekennzeichnet,**
**daß** die Schiebehülse (11) auf dem Innenumfang plastisch eingeformte Einzelvertiefungen (24) zur formschlüssigen Aufnahme von Material eines Schlauch- oder Rohrendes aufweist.

5. Schiebehülse (11) nach einem der Ansprüche 1 bis 3,
**dadurch gekennzeichnet,**
**daß** die Schiebehülse (11) auf dem Innenumfang eine plastisch eingeformte Umfangsnut (25) zur formschlüssigen Aufnahme von Material eines Schlauch- oder Rohrendes aufweist.

6. Schiebehülse (11) nach einem der Ansprüche 1 bis 5,
**dadurch gekennzeichnet,**
**daß** sie aus vergütetem Stahl, insbesondere vergütetem Edelstahl besteht.

7. Schiebehülse (11) nach einem der Ansprüche 1 bis 5,
**dadurch gekennzeichnet,**
**daß** sie aus unvergütetem Stahl, insbesondere Edelstahl besteht.

8. Verfahren zur Herstellung einer Hülse zur Festlegung eines Schlauch- oder Rohrendes auf einem Anschlußstutzen,
**dadurch gekennzeichnet,**
**daß** von endlosem Metallband Bandabschnitte (41) abgeteilt werden, wobei die Trennstellen jeweils Verschweißkanten (17,18) bilden, und
**daß** die Bandabschnitte (41) rundgebogen werden und längs der aneinanderstoßenden Verschweißkanten (17,18) miteinander verschweißt werden.

9. Verfahren nach Anspruch 8,
**dadurch gekennzeichnet,**
**daß** die Verschweißkanten (17, 18) mittels Laserschweißens verschweißt werden.

10. Verfahren nach einem der Ansprüche 8 oder 9
**dadurch gekennzeichnet,**
**daß** das Metallband - insbesondere vor dem Abteilen der Bandabschnitte (41) - zur Bildung einer Kantenrundung oder Fase längs einer Kante gerollt wird, die nach dem Rundbiegen zu einer Innenkante wird, um eine Aufgleitrundung (22) oder eine Aufgleitfase (32) am Ende der Schiebehülse (11) zu bilden.

11. Verfahren nach einem der Ansprüche 8 bis 10,
**dadurch gekennzeichnet,**
**daß** das Metallband - insbesondere vor dem Abteilen der Bandabschnitte (41) - zur Bildung von Formschlußmitteln mit Abstand zu einer Kante mit periodisch angeordneten Einprägungen (24) versehen wird, die nach dem Rundbiegen auf dem Innenumfang verteilt liegen.

12. Verfahren nach einem der Ansprüche 8 bis 10,
**dadurch gekennzeichnet,**
**daß** das Metallband - insbesondere vor dem Abteilen der Bandabschnitte (41) - zur Bildung von Formschlußmitteln mit Abstand zu einer Kante mit einer gerollten Längsnut (25) versehen wird, die nach dem Rundbiegen auf den Innenumfang liegt.

13. Verfahren nach einem der Ansprüche 8 bis 12,
**dadurch gekennzeichnet,**
**daß** Metallband aus Vergütungsstahl bereitgestellt wird und daß die Schiebehülse (11) nach dem Verschweißen der Verschweißkanten (17, 18) vergütet wird.
